(19)

Europäisches Patentamt
European Patent Office
Office européen des brevets

(11) **EP 4 174 028 B1**

(12) **EUROPEAN PATENT SPECIFICATION**

(45) Date of publication and mention
of the grant of the patent:
**19.02.2025 Bulletin 2025/08**

(21) Application number: **22203198.1**

(22) Date of filing: **24.10.2022**

(51) International Patent Classification (IPC):
***C01G 53/00*** (2025.01)   ***H01M 4/525*** (2010.01)

(52) Cooperative Patent Classification (CPC):
**C01G 53/50; C01G 53/82; H01M 4/366;
H01M 4/485; H01M 4/525;** C01P 2004/50;
C01P 2004/84; H01M 10/0525; H01M 2004/028;
Y02E 60/10

(54) **POSITIVE ELECTRODE ACTIVE MATERIAL AND LITHIUM SECONDARY BATTERY INCLUDING THE SAME**

POSITIVELEKTRODENAKTIVMATERIAL UND LITHIUMSEKUNDÄRBATTERIE DAMIT

MATÉRIAU ACTIF D'ÉLECTRODE POSITIVE ET BATTERIE SECONDAIRE AU LITHIUM LE COMPRENANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **28.10.2021   KR 20210145309**

(43) Date of publication of application:
**03.05.2023   Bulletin 2023/18**

(73) Proprietor: **ECOPRO BM CO., LTD.
Cheongju-si, Chungcheongbuk-do 28116 (KR)**

(72) Inventors:
• **BAE, Joong Ho**
  **28116 Cheongju-si, Chungcheongbuk-do (KR)**
• **KIM, Du Yeol**
  **28116 Cheongju-si, Chungcheongbuk-do (KR)**
• **CHOI, Moon Ho**
  **28116 Cheongju-si, Chungcheongbuk-do (KR)**
• **SUH, Jun Won**
  **28116 Cheongju-si, Chungcheongbuk-do (KR)**
• **KIM, Sun Kyu**
  **28116 Cheongju-si, Chungcheongbuk-do (KR)**
• **LEE, Jung Han**
  **28116 Cheongju-si, Chungcheongbuk-do (KR)**
• **CHOI, Seung Woo**
  **28116 Cheongju-si, Chungcheongbuk-do (KR)**

(74) Representative: **BCKIP Part mbB
MK1
Landsbergerstraße 98, 3.Stock
80339 München (DE)**

(56) References cited:
**EP-A1- 3 690 999       EP-A1- 3 950 599
CN-A- 106 910 874     CN-A- 112 654 585
CN-A- 112 928 253**

• **XI XIAOSHUANG ET AL: "Enhanced cyclic
stability of NCM-622 cathode by Ti3+ doped TiO2
coating", JOURNAL OF ALLOYS AND
COMPOUNDS, ELSEVIER SEQUOIA,
LAUSANNE, CH, vol. 872, 27 March 2021
(2021-03-27), XP086555476, ISSN: 0925-8388,
[retrieved on 20210327], DOI: 10.1016/
J.JALLCOM.2021.159664**

**Description**

BACKGROUND

**1. Field of the Invention**

The present invention relates to a positive electrode active material and a lithium secondary battery including the same, and more specifically, to a positive electrode active material including a lithium composite oxide containing at least nickel and titanium, wherein the titanium is present in an oxide form in at least a portion of the surface of the lithium composite oxide at the same time as being doped in the lithium composite oxide, and thus it is possible to simultaneously improve the output efficiency and high-temperature lifetime characteristics (high-temperature cycle capacity retention rate) of a lithium secondary battery using the positive electrode active material, and a lithium secondary battery including the same.

**2. Discussion of Related Art**

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials, and is manufactured by charging an organic electrolyte solution or a polymer electrolyte solution between the positive electrode and the negative electrode.

A lithium composite oxide is used as a positive electrode active material of the lithium secondary battery, and composite oxides such as $LiCoO_2$, $LiMn_2O_4$, $LiNiO_2$, $LiMnO_2$, etc. are being studied.

Among the positive electrode active materials, $LiCoO_2$ is most widely used due to excellent lifetime characteristics and charge/discharge efficiency, but it is expensive because of the limited resource of cobalt, which is used as a raw material, and thus has a disadvantage of limited price competitiveness.

Lithium manganese oxides such as $LiMnO_2$ and $LiMn_2O_4$ have advantages of excellent thermal safety and low costs, but also have problems of small capacity and poor high-temperature characteristics. In addition, while a $LiNiO_2$-based positive electrode active material exhibits a battery characteristic such as a high discharge capacity, due to cation mixing between Li and a transition metal, it is difficult to synthesize the $LiNiO_2$-based positive electrode active material, thereby causing a big problem in rate characteristics.

In addition, depending on the intensification of such cation mixing, a large amount of Li by-products is generated, and since most of the Li by-products consist of compounds of LiOH and $Li_2CO_3$, they become a cause of gelation in preparation of a positive electrode paste and gas generation according to charge/discharge progression after the preparation of an electrode. Residual $Li_2CO_3$ increases the swelling phenomenon of a cell and thus reduces cycles and also leads to the swelling of a battery.

Meanwhile, a high-Ni type positive electrode active material having a high Ni content in the positive electrode active material is attracting attention in order to manufacture a higher-spec lithium secondary battery. However, since this high-Ni type positive electrode active material has problems caused by cation mixing, like the above-described $LiNiO_2$-based positive electrode active material, attempts have been made to increase the stability of the positive electrode active material by doping or coating the high-Ni type positive electrode active material with a metal element other than the main transition metal element.

EP 3 690 999 A1 and CN 112 654 585 A disclose various electrode active materials comprising lithium composite oxides comprising at least nickel and titanium, wherein the titanium content near the surface of the primary particles differs from the titanium content near the centre of the primary particles.

SUMMARY OF THE INVENTION

In the lithium secondary battery market, while the growth of lithium secondary batteries for electric vehicles is playing a leading role in the market, the demand for positive electrode materials used in lithium secondary batteries is also constantly changing.

For example, in the related art, lithium secondary batteries using LFP have been mainly used from the viewpoint of ensuring safety, but in recent years, the use of nickel-based lithium composite oxides having a larger energy capacity per weight compared to LFP has been expanding.

Accordingly, a positive electrode active material used in a lithium secondary battery of higher quality needs to satisfy both stability and reliability which are suitably expected under more severe operating conditions.

In consideration of these circumstances, an object of the present invention is to provide a positive electrode active material including a lithium composite oxide containing at least nickel and titanium, wherein the titanium is present in an oxide form in at least a portion of the surface of the lithium composite oxide at the same time as being doped in the lithium composite oxide, and thus it is possible to simultaneously improve the output efficiency and high-temperature lifetime characteristics (high-temperature cycle capacity retention rate) of a lithium secondary battery using the positive electrode active material.

Further, another object of the present invention is to provide a positive electrode including a positive electrode active material as defined herein.

In addition, still another object of the present invention is to provide a lithium secondary battery using a positive electrode as defined herein.

According to one aspect of the present invention, there is provided a positive electrode active material including a lithium composite oxide containing at least nickel and titanium, wherein the titanium is present in an oxide form in at least a portion of the surface of the lithium composite oxide at the same time as being doped in the lithium composite oxide, and thus it is possible to simultaneously improve the output efficiency and high-temperature lifetime characteristics (high-temperature cycle capacity retention rate) of a lithium secondary battery using the positive electrode active material.

Specifically, the lithium composite oxide may be a secondary particle in which a plurality of primary particles are agglomerated, and the content (mol%) of titanium calculated from the line sum spectrum of titanium obtained through EDX line scanning for the short axis direction of the primary particle selected from the cross-sectional TEM image of the lithium composite oxide may satisfy the following Equation 1:

$$[Equation\ 1]$$
$$1.4 \leq ((a1+a2)/2)/b1 \leq 3.25$$

wherein, when the short axis diameter of the primary particle selected from the cross-sectional TEM image is r,
a1 is the average content (mol%) of titanium measured based on all metal elements excluding lithium in the region of 0 to 0.05r from the start point of the line sum spectrum,
a2 is the average content (mol%) of titanium measured based on all metal elements excluding lithium in the region of 0.95r to r from the start point of the line sum spectrum, and
b1 is the average content (mol%) of titanium measured based on all metal elements excluding lithium in the region of 0.05r to 0.95r from the start point of the line sum spectrum.

In one embodiment, titanium in the lithium composite oxide is present in an amount greater than 0.2 mol% and less than 3.3 mol% based on all metal elements excluding lithium.

Titanium in the lithium composite oxide is present in an amount greater than 0.2 mol% based on all metal elements excluding lithium, so an overall indicator showing the electrochemical properties of a lithium secondary battery using the positive electrode active material (for example, charge capacity, discharge capacity, charge/discharge efficiency, cycle capacity retention rate, impedance characteristics, output efficiency, etc.) can be improved, and in particular, high-temperature lifetime characteristics can be improved.

In an embodiment, at least a portion of titanium in the lithium composite oxide may be present in a doped state in the primary particle.

At this time, it is preferable that the average content (mol%) of titanium measured based on all metal elements excluding lithium in the region of 0.05r to 0.95r from the start point of the line sum spectrum is greater than 0.083 mol% and less than 0.832 mol%.

The titanium present in the region of 0.05r to 0.95r from the start point of the line sum spectrum may correspond to titanium present as doped in the primary particle, and the average content (mol %) of titanium based on the total metal element excluding lithium in the region between 0.05r and 0.95r from the start point of the line sum spectrum may be present in an amount exceeding 0.083 mol %, thereby improving the output efficiency of the lithium secondary battery using the positive electrode active material.

The lithium composite oxide further includes at least one metal element selected from cobalt, manganese, and aluminum.

Specifically, the primary particle is represented by the following Chemical Formula 1.

[Chemical Formula 1]     $Li_wNi_{1-(x+y+z)}Ti_xM1_yM2_zO_2$

wherein,

M1 is at least one selected from Co, Mn, and Al,

M2 is at least one selected from P, Sr, Ba, Zr, Co, Mn, Al, W, Ce, Hf, Ta, F, Mg, Cr, V, Fe, Zn, Si, Y, Ga, Sn, Mo, Ge, Nd, B, Nb, Gd, and Cu;

M1 and M2 are different from each other,

$0.5 \leq w \leq 1.5$, $0.002 < x < 0.033$, $0 < y \leq 0.40$, $0 \leq z \leq 0.20$.

In an embodiment, the primary particle may be a core-shell particle including a core and a shell present on at least a portion of the surface of the core, and a metal oxide represented by the following Chemical Formula 2 may be present in the shell.

[Chemical Formula 2]        $Li_aTi_bM3_cO_d$

wherein,

M3 is at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Ce, Gd and Nd, and

$0 \leq a \leq 10$, $0 < b \leq 8$, $0 \leq c \leq 8$, $2 \leq d \leq 13$.

The metal oxide may include at least one selected from titanium oxide and lithium titanium oxide.

As the metal oxide represented by Chemical Formula 2 is present on at least a portion of the surface of the core, the content of titanium in the surface of the primary particle may be set to exist above a predetermined level. Accordingly, the impedance characteristics and high-temperature cycle capacity retention rate of the lithium secondary battery using the positive electrode active material may be improved.

In addition, according to another aspect of the present invention, a positive electrode including the positive electrode active material as defined herein is provided.

In addition, according to still another aspect of the present invention, a lithium secondary battery using the positive electrode as defined herein is provided.

According to the present invention, titanium in the lithium composite oxide is present in a doped state and at the same time in the form of an oxide on at least a portion of the surface of the lithium composite oxide, so that the output efficiency and high-temperature lifetime characteristics (high-temperature cycle capacity retention rate) of the lithium secondary battery can be improved at the same time.

At this time, when the content of doped titanium in the lithium composite oxide is equal to or more than the content of titanium present in the form of an oxide on at least a part of the surface of the lithium composite oxide at a predetermined ratio, the surface resistance of the lithium composite oxide may increase and the impedance characteristics and the cycle capacity retention rate may decrease.

In addition, when the content of titanium present in an oxide form on at least a part of the surface of the lithium composite oxide is equal to or more than the content of the doped titanium in the lithium composite oxide at a predetermined ratio, the output efficiency of a lithium secondary battery using the lithium composite oxide as a positive electrode active material may be lowered.

According to the present invention, the content of doped titanium in the lithium composite oxide and the content of titanium present in the form of an oxide on at least a part of the surface thereof can be controlled to improve overall indicators related to the secondary battery's electrochemical characteristics including output efficiency, impedance characteristics, and high-temperature lifetime characteristics (high-temperature cycle capacity retention rate).

BRIEF DESCRIPTION OF THE DRAWINGS

FIG. 1 is a cross-sectional TEM image of a lithium composite oxide included in a positive electrode active material according to Example 1, wherein the direction of the arrow in FIG. 1 indicates the line scanning direction along the short axis direction of the primary particle, and the broken line indicates the line sum spectrum section.

FIG. 2 shows a line sum spectrum of titanium according to the line scanning direction shown in FIG. 1.

FIG. 3 shows a cross-sectional TEM image of the lithium composite oxide included in the positive electrode active material according to Example 1 taken at an angle different from that of FIG. 1 and EDX mapping results for titanium.

FIG. 4 is a cross-sectional TEM image of a lithium composite oxide included in a positive electrode active material according to Comparative Example 1, wherein the direction of the arrow in FIG. 4 indicates the line scanning direction along the short axis direction of the primary particle.

FIG. 5 shows a line sum spectrum of titanium according to the line scanning direction shown in FIG. 4, and a broken line indicates a line sum spectrum section.

FIG. 6 shows a cross-sectional TEM image of the lithium composite oxide included in the positive electrode active material according to Comparative Example 1 taken at an angle different from that of FIG. 4 and EDX mapping results for titanium.

FIG. 7 is a cross-sectional TEM image of a lithium composite oxide included in a positive electrode active material according to Comparative Example 4, wherein the direction of the arrow in FIG. 7 indicates the line scanning direction along the short axis direction of the primary particle, and the broken line indicates the line sum spectrum section.

FIG. 8 shows a line sum spectrum of titanium according to the line scanning direction shown in FIG. 7.

FIG. 9 shows a cross-sectional TEM image of the lithium composite oxide included in the positive electrode active material according to Comparative Example 4 taken at an angle different from that of FIG. 7 and EDX mapping results for titanium.

DETAILED DESCRIPTION OF EXEMPLARY EMBODIMENTS

Hereinafter, the positive electrode active material according to the present invention and the lithium secondary battery including the positive electrode active material will be described in more detail.

Positive electrode active material

According to one aspect of the present invention, there is provided a positive electrode active material including a lithium composite oxide containing at least nickel and titanium. In addition, the lithium composite oxide includes lithium in addition to nickel and titanium, and is a composite metal oxide having a layered crystal structure capable of intercalation and deintercalation of lithium ions.
The lithium composite oxide included in the positive electrode active material as defined herein may be a secondary particle including at least one primary particle. At this time, the primary particle may be expressed as crystallites.
Herein, "secondary particles including at least one primary particles" shall be interpreted to include both "particles formed by agglomerating a plurality of primary particles" and "non-agglomerated single particles composed of single crystallites".
The primary particle and the secondary particle may each independently have a rod shape, an oval shape, and/or an irregular shape.
When the average long axis length is used as an index indicating the sizes of the primary particle and the secondary particles, the average long axis length of the primary particle constituting the lithium composite oxide may be 0.1 μm to 5 μm, and the average long axis length of the secondary particles may be between 1 μm and 30 μm. The average long axis length of the secondary particles may vary depending on the number of the primary particle constituting the secondary particles, and particles having various average long axis lengths may be included in the positive electrode active material.
When the lithium composite oxide is "non-agglomerated single particles composed of single crystallites" or "particles formed by agglomeration of a relatively small number of primary particles", the size (average particle diameter) of the primary particle included in the "non-agglomerated single particles composed of single crystallites" or "particles formed by agglomeration of a relatively small number of primary particles" may be larger than the size (average particle diameter of the primary particle included in a "secondary particle formed by agglomeration of several tens to several hundreds or more of primary particles."
As such, the lithium composite oxides that are "non-agglomerated single particles composed of single crystallites" or "particles formed by agglomeration of a relatively small number of primary particles" generally require strong heat treatment conditions (high heat treatment temperature/long-time heat treatment) as compared to when producing "secondary particles formed by agglomeration of several tens to several hundreds or more of primary particles." In general, it is known that, when heat treatment is performed at a relatively high temperature (for example, 800 °C or more) for a long time, particle growth (crystal growth) is promoted to obtain a positive electrode active material having a large single particle size and a low agglomeration degree at the same time.

For example, when the lithium composite oxide is "non-agglomerated single particles composed of single crystallites" or "particles formed by agglomeration of a relatively small number of primary particles," the average long axis length of the primary particle may be in the range of 0.5 $\mu$m to 20 $\mu$m. On the other hand, when the lithium composite oxide is "particles formed by agglomeration of a plurality (several tens to several hundreds or more) of primary particles," the average long axis length of the primary particle may be in the range of 0.1 $\mu$m to 5 $\mu$m.

In an embodiment, wherein at least a portion of titanium in the lithium composite oxide may be present in a doped state in the primary particle.

The content of doped titanium in the primary particle may be calculated from the content of the titanium raw material mixed with the hydroxide precursor of the lithium composite oxide, or may be measured through TEM-EDX or EP-EDX analysis with respect to the primary particle.

In addition, according to the present invention, titanium in the lithium composite oxide is present in a doped state and at the same time in the form of an oxide on at least a portion of the surface of the lithium composite oxide, so that the output efficiency and high-temperature lifetime characteristics (cycle capacity retention rate) of the lithium secondary battery using the lithium composite oxide as a positive electrode active material can be improved at the same time.

In order to achieve the above-described effect, titanium in the lithium composite oxide is present in an amount greater than 0.2 mol% based on all metal elements excluding lithium. At this time, the content of titanium in the lithium composite oxide can be confirmed from the bulk composition measured through ICP analysis of the lithium composite oxide.

The titanium in the lithium composite oxide is present in an amount greater than 0.2 mol% based on all metal elements excluding lithium, so an overall indicator showing the electrochemical properties of a lithium secondary battery using the positive electrode active material (for example, charge capacity, discharge capacity, charge and discharge efficiency, cycle capacity retention rate, impedance characteristics, output efficiency, etc.) may be improved.

On the other hand, titanium in the lithium composite oxide is present in an amount less than 3.3 mol% based on all metal elements excluding lithium. When the content of titanium in the lithium composite oxide is excessively increased, the charge capacity, discharge capacity and charge/discharge efficiency of the lithium secondary battery using the lithium composite oxide as a positive electrode active material may be reduced.

The lithium composite oxide further includes at least one metal element selected from cobalt, manganese, and aluminum. In addition, the primary particle constituting the lithium composite oxide further includes at least one metal element selected from cobalt, manganese, and aluminum.

Specifically, the primary particle is represented by the following Chemical Formula 1. In addition, the bulk composition of the secondary particles in which a plurality of primary particles are agglomerated is also represented by the following Chemical Formula 1.

[Chemical Formula 1] $\qquad$ $Li_wNi_{1-(x+y+z)}Ti_xM1_yM2_zO_2$

wherein,

M1 is at least one selected from Co, Mn, and Al,
M2 is at least one selected from P, Sr, Ba, Zr, Co, Mn, Al, W, Ce, Hf, Ta, F, Mg, Cr, V, Fe, Zn, Si, Y, Ga, Sn, Mo, Ge, Nd, B, Nb, Gd, and Cu;
M1 and M2 are different from each other,
$0.5 \leq w \leq 1.5$, $0.002 < x < 0.033$, $0 < y \leq 0.40$, $0 \leq z \leq 0.20$.

The lithium composite oxide may be a high-Ni type lithium composite oxide in which concentrations (mol%) of Ni, M1, M2 and Ti in Chemical Formula 1 satisfy Relational Formula 1 below.

$$[\text{Relational Formula 1}]$$
$$Ni/(Ni+M1+M2+Ti) \geq 80.0$$

In addition, when the lithium composite oxide contains cobalt, it may be a high-Ni/low-Co type lithium composite oxide containing cobalt in an amount of 10 mol% or less, preferably 5 mol% or less, more preferably 3 mol% or less, based on all metal elements excluding lithium in the lithium composite oxide.

In general, it is known that as the content of nickel in the lithium composite oxide increases, structural instability due to Li/Ni cation mixing may occur. In addition, it is known that as the content of cobalt in the lithium composite oxide decreases, the initial overvoltage (resistance) increases, and accordingly, the rate characteristic is unavoidably deteriorated.

However, since the lithium composite oxide included in the positive electrode active material as defined herein is present in the state in which titanium in the lithium composite oxides is doped and at the same time is in the form of an oxide on at least a portion of the surface of the lithium composite oxide, it is possible to improve both the output efficiency and high-temperature lifetime characteristics (high-temperature cycle capacity retention rate) of a lithium secondary battery using the high-Ni type lithium composite oxide or the high-Ni/low-Co type lithium composite oxide as a positive-electrode active material.

Meanwhile, when the content of doped titanium in the lithium composite oxide is equal to or more than the content of titanium present in the form of an oxide on at least a portion of the surface of the lithium composite oxide at a predetermined ratio, the surface resistance of the lithium composite oxide may increase and thus the impedance characteristics and the cycle capacity retention rate may decrease.

In addition, when the content of titanium present in an oxide form on at least a portion of the surface of the lithium composite oxide is equal to or more than the content of the doped titanium in the lithium composite oxide at a predetermined ratio, the output efficiency of a lithium secondary battery using the lithium composite oxide as a positive electrode active material may be lowered.

Accordingly, the lithium composite oxide defined herein can improve overall indicators related to the lithium secondary battery's electrochemical characteristics including output efficiency, impedance characteristics, and high-temperature lifetime characteristics (high-temperature cycle capacity retention rate) by controlling the content of the doped titanium in the lithium composite oxide and the content of titanium present in an oxide form in at least a portion of the surface of the titanium composite oxide as described below.

Specifically, in the lithium composite oxide as defined herein, the content (mol%) of titanium calculated from the line sum spectrum of titanium obtained through EDX line scanning for the short axis direction of the primary particle selected from the cross-sectional TEM image of the lithium composite oxide may satisfy the following Equation 1:

$$[\text{Equation } 1]$$

$$1.4 \leq ((a1+a2)/2)/b1 \leq 3.25.$$

wherein, when the short axis diameter of the primary particle selected from the cross-sectional TEM image is r, a1 is the average content (mol%) of titanium measured based on all metal elements excluding lithium in the region of 0 to 0.05r from the start point of the line sum spectrum, a2 is the average content (mol%) of titanium measured based on all metal elements excluding lithium in the region of 0.95r to r from the start point of the line sum spectrum, and b1 is the average content (mol%) of titanium measured based on all metal elements excluding lithium in the region of 0.05r to 0.95r from the start point of the line sum spectrum.

That is, a1 and a2 represent the average content (mol%) of titanium in the surface portion (length corresponding to 5% of the short axis diameter of the primary particle) of the primary particle, respectively, based on the line sum spectrum, and b1 represents the average content (mol%) of titanium in the central portion (length corresponding to 90% of the short axis diameter of the primary particle) of the primary particle based on the line sum spectrum.

The average content (mol%) of titanium based on all metal elements excluding lithium in the region of 0.05r to 0.95r from the start point of the line sum spectrum may be more than 0.083 mol% and less than 0.832 mol%, preferably more than 0.3 mol% and less than 0.7 mol%.

Titanium present in a region of 0.05r to 0.95r from the start point of the line sum spectrum may correspond to titanium present in a doped state in the primary particle.

At this time, the content of titanium present in the doped state in the primary particle does not necessarily coincide with the content of the titanium-containing raw material that is mixed with the hydroxide precursor of the lithium composite oxide and then heat-treated (corresponding to the first heat treatment of Preparation Example 1).

That is, some of titanium of the titanium-containing raw materials that are mixed with the hydroxide precursor of the lithium composite oxide and then heat-treated may be present in the range of 0 to 0.05r and 0.95r to r from the start point of the line sum spectrum.

The average content (mol %) of titanium based on the total metal element excluding lithium in the region between 0.05r and 0.95r from the start point of the line sum spectrum is present in an amount exceeding 0.083 mol %, thereby the output efficiency among the indicators related to the electrochemical properties of the lithium secondary battery using the positive electrode active material.

On the other hand, it is preferable that the average content (mol%) of titanium based on all metal elements excluding lithium in the region of 0.05r to 0.95r from the start point of the line sum spectrum is less than 0.832 mol%. As the average content of titanium in the region increases, the output efficiency of the lithium secondary battery using the positive electrode active material may be further improved, on the contrary, the effect of lowering the surface resistance of the lithium composite oxide is insignificant, so that it may be difficult to improve impedance characteristics and cycle capacity retention rate of a lithium secondary battery using the positive electrode active material.

In addition, the sum of the average content (mol%) of titanium measured based on all metal elements excluding lithium in the range of 0 to 0.05r from the start point of the line sum spectrum and the average content (mol%) of titanium measured based on all metal elements excluding lithium in the range of 0.95 to r may be more than 0.227 mol% and less than 2.699 mol%, preferably more than 0.8 mol% and less than 1.2 mol%.

Titanium present in the region of 0 to 0.05r and 0.95r to r from the start point of the line sum spectrum is coated on the surface of the primary particle, or may correspond to titanium present in a state doped in the region adjacent to the outermost part of the primary particle.

At this time, the content of titanium coated on the surface of the primary particle or doped in the region adjacent to the outermost part of the primary particle does not necessarily coincide with the content of the titanium-containing raw material that is mixed with the lithium composite oxide and then heat-treated (corresponding to the second heat treatment of Preparation Example 1).

That is, at least a portion of titanium of the titanium-containing raw material that is heat-treated after being mixed with the lithium composite oxide may be present in a range of 0.05r to 0.95r from the start point of the line sum spectrum.

In addition, when the sum of the average content (mol%) of titanium measured based on all metal elements excluding lithium in the range of 0 to 0.05r from the start point of the line sum spectrum and the average content (mol%) of titanium measured based on all metal elements excluding lithium in the range of 0.95 to r is present in an amount less than 0.227 mol%, it may be difficult to improve impedance characteristics and cycle capacity retention rate of a lithium secondary battery using the positive electrode active material.

On the other hand, when the sum of the average content (mol%) of titanium measured based on all metal elements excluding lithium in the range of 0 to 0.05r from the start point of the line sum spectrum and the average content (mol%) of titanium measured based on all metal elements excluding lithium in the range of 0.95 to r is present in an amount greater than 2.669 mol %, the output efficiency among indicators related to the electrochemical properties of the lithium secondary battery using the positive electrode active material may be reduced. As described above, the content of titanium present in the doped state in the primary particle may not be exactly matched to the content of a titanium-containing raw material that is mixed with the hydroxide precursor of the lithium composite oxide and then heat-treated (corresponding to the first heat treatment of Preparation Example 1) and the content of a titanium-containing raw material that is mixed with the lithium composite oxide and then heat-treated (corresponding to the second heat treatment of Preparation Example 1); and average content (mol%) of titanium measured based on all metal elements excluding lithium in the region of 0 to 0.05r, the region of 0.05r to 0.95r and the region of 0.95r to r from the start point of the line sum spectrum with respect to the short axis direction of the primary particle.

Accordingly, in the present invention, instead of considering the amount of titanium-containing raw material used, the content of titanium present in each region is measured on the line sum spectrum, and the correlation between the of titanium in each region and the electrochemical characteristics (in particular, high-temperature life characteristics) of the lithium secondary battery using the lithium composite oxide as the positive electrode active material was derived.

In summary, assuming that ((a1+a2)/2)/b1 defined above satisfies the range of Equation 1, the content of titanium in the lithium composite oxide is present in the range of greater than 0.2 mol% and less than 3.3 mol% based on all metal elements excluding lithium, and the average content (mol%) of titanium measured based on all metal elements excluding lithium in the region of 0 to 0.05r, the region of 0.05r to 0.95r and the region of 0.95r to r from the start point of the line sum spectrum with respect to the short axis direction of the primary particle is within a predetermined range, so that it is possible to simultaneously improve overall indicators related to the electrochemical properties of the lithium secondary battery, including output efficiency, impedance characteristics, and high-temperature lifetime characteristics (high-temperature cycle capacity retention rate).

Although the content of titanium in the lithium composite oxide and the primary particle satisfies the above-mentioned ranges, when ((a1+a2)/2)/b1 is less than 1.4, the output efficiency such as c-rate of the lithium secondary battery using the lithium composite oxide as a positive electrode active material may be improved, but the improvement effect of other indicators (for example, charge capacity, discharge capacity, charge/discharge efficiency, impedance characteristics, lifetime characteristics, etc.) may be insignificant.

On the other hand, when ((a1+a2)/2)/b1 is greater than 3.25, despite the content of titanium in the lithium composite oxide and the primary particle satisfying the above-described ranges, the EIS and cycle capacity retention rate of a lithium secondary battery using the lithium composite oxide as a positive electrode active material may be improved, but the improvement effect of the charge capacity, the discharge capacity and the charge/discharge efficiency and the output characteristic (c-rate) may be insignificant.

The primary particle may be defined as a core-shell particle including a core and a shell present on at least a portion of a surface of the core. In this case, a metal oxide represented by the following Chemical Formula 2 may be present in the shell.

[Chemical Formula 2]    $Li_aTi_bM3_cO_d$

wherein,

M3 is at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Ce, Gd and Nd, and
$0 \leq a \leq 10$, $0 < b \leq 8$, $0 \leq c \leq 8$, $2 \leq d \leq 13$.

That is, the shell may be defined as a region in which the metal oxide represented by Chemical Formula 2 is present.

As described above, when the primary particle is defined as a core-shell particle, a1 and a2 in Equation 1 are the average content (mol%) of titanium measured based on all metal elements excluding lithium in a region of 0 to 0.05r from the outermost part of the core-shell particle (wherein a1 and a2 will each refer to the content of titanium in the region located at the starting point and ending point of line scanning based on the line sum spectrum), and b1 may be the average content (mol %) of titanium measured on the basis of the total metal element excluding lithium in the region from 0.05r to 0.95r from the outermost part of the core-shell particle.

At least one selected from titanium oxide and lithium titanium oxide may be present in the shell. In addition, the titanium oxide and/or the lithium titanium oxide may be a metal oxide complexed with M3.

The metal oxide may be physically and/or chemically bonded to the primary particle. In addition, the metal oxide may be present in a state in which a solid solution is formed with the primary particle.

Based on the secondary particles, the metal oxide may be partially or entirely present at the interface between the primary particle located inside the secondary particles and/or on the surface of the secondary particles. When the metal oxide is partially present on the surface of the primary particle and/or the secondary particle, the shell may exist in the form of an island.

Lithium secondary battery

Another aspect of the present invention may provide a positive electrode including a positive electrode current collector and a positive electrode active material layer formed on the positive electrode current collector. Herein, the positive electrode active material layer may include positive electrode active materials according to various embodiments of the present invention. Therefore, since the positive electrode active material is the same as described above, detailed description thereof will be omitted for convenience, and hereinafter, other components that have not been described will be described.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 μm, and fine irregularities may be formed on the surface of the current collector, thereby increasing the adhesive strength of a positive electrode active material. For example, the positive electrode current collector may be used in various forms such as a film, a sheet, a foil, a net, a porous body, a foam, a nonwoven body, etc.

The positive electrode active material layer may be prepared by coating the positive electrode current collector with a positive electrode slurry composition including the positive electrode active material, a conductive material, and a binder included optionally as needed.

In this case, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used for imparting conductivity to an electrode, and may be used without particular limitation as long as it has electron conductivity without causing a chemical change in a battery to be formed. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator film and an electrolyte, which are interposed between the positive electrode and the negative electrode. Herein, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator film, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 $\mu$m, and like the positive electrode current collector, fine irregularities may be formed on the current collector surface, thereby enhancing the binding strength of the negative electrode active material. For example, the positive electrode current collector may be used in various forms such as a film, a sheet, a foil, a net, a porous body, a foam, a nonwoven body, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrile-butadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

**In** an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

**In** addition, in another exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator film is not particularly limited as long as it is generally used in a lithium secondary battery to separate a negative electrode from a positive electrode and provide a diffusion path for lithium ions, and particularly, the separator film has a low resistance to ion mobility of an electrolyte and an excellent electrolyte solution impregnation ability. Specifically, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a laminated structure including two or more of these layers may be used. In addition, a conventional porous nonwoven fabric, for example, a nonwoven fabric made of high melting point glass fiber, polyethylene terephthalate fiber, etc. may be used. In addition, a coated separator including a ceramic component or a polymer material may be used to secure heat resistance or mechanical strength, and may optionally be used in a single-layer or multi-layer structure.

In addition, the electrolyte used in the present invention may be an organic liquid electrolyte, an inorganic liquid electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charge/-discharge performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, or $LiN(CF_3SO_2)_2$. $LiCl$, $LiI$, or $LiB(C_2O_4)_2$ or the like may be used. The concentration of the lithium salt is preferably used within the range of 0.1 M to 2.0 M. When the concentration of the lithium salt is included in the above-mentioned range, the electrolyte has suitable conductivity and viscosity and thus can exhibit excellent electrolytic performance. Therefore, lithium ions can effectively migrate.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. In this case, the additive(s) may be included at 0.1 to 5 wt% with respect to the total weight of the electrolyte.

Since the lithium secondary battery including the positive electrode active material according to the present invention stably exhibits excellent discharge capacity, excellent output efficiency and excellent lifetime characteristics, it is useful in portable devices such as a mobile phone, a notebook computer and a digital camera and an electric automobile field such as a hybrid electric vehicle (HEV).

The external shape of the lithium secondary battery of the present invention is not particularly limited, but may be a cylindrical type using a can, a prismatic type, a pouch type, or a coin type. In addition, the lithium secondary battery may be used in a battery cell that is not only used as a power source of a small device, but also preferably used as a unit battery for a medium-to-large battery module including a plurality of battery cells.

According to yet another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in more detail through examples. However, these examples are merely provided to explain the present invention, and it will not be interpreted that the scope of the present invention is limited by the examples below.

Preparation Example 1. Preparation of positive electrode active material

(a) A hydroxide precursor of $Ni_{0.80}Co_{0.10}Mn_{0.10}(OH)_2$ was prepared using a precursor aqueous solution in which nickel sulfate, cobalt sulfate and manganese sulfate were mixed in a molar ratio of 80:10:10 through a known co-precipitation method.

(b) After mixing the obtained hydroxide precursor, LiOH (Li/(Ni+Co+Mn) molar ratio = 1.03) and $TiO_2$, the temperature was raised to 720 °C at 2 °C per minute while maintaining an $O_2$ atmosphere in a calcining furnace, and a first heat treatment was performed at 720 °C for 12 hours to obtain a lithium composite oxide.

(c) After mixing the lithium composite oxide and $TiO_2$, the temperature was raised at 2°C per minute to 700 °C while maintaining an $O_2$ atmosphere in a calcining furnace, and a second heat treatment was performed at 700 °C for 8 hours to obtain a lithium composite oxide coated with Ti on the surface.

The overall composition confirmed through ICP analysis of the content of $TiO_2$ used in step (b) (mol% converted based on the metal element in the hydroxide precursor), the content of $TiO_2$ used in step (c) (mol% converted based on the metal element excluding lithium in the lithium composite oxide) and the positive electrode active material finally obtained through step (c) is shown in Table 1 below.

[Table 1]

| Classification | Composition | Step (b) - $TiO_2$ (mol%) | Step (c) - $TiO_2$ (mol%) |
|---|---|---|---|
| Example 1 | $Li_{1.03}Ni_{0.791}Co_{0.099}Mn_{0.999}Ti_{0.011}O_2$ | 0.5 | 0.6 |
| Example 2 | $Li_{1.03}Ni_{0.791}Co_{0.099}Mn_{0.099}Ti_{0.011}O_2$ | 0.6 | 0.5 |
| Example 3 | $Li_{1.03}Ni_{0.791}Co_{0.099}Mn_{0.099}Ti_{0.011}O_2$ | 0.4 | 0.7 |
| Example 4 | $Li_{1.03}Ni_{0.930}Co_{0.030}Mn_{0.029}Ti_{0.011}O_2$ | 0.5 | 0.6 |
| Example 5 | $Li_{1.03}Ni_{0.930}Co_{0.030}Mn_{0.029}Ti_{0.011}O_2$ | 0.6 | 0.5 |

(continued)

| Classification | Composition | Step (b) - $TiO_2$ (mol%) | Step (c) - $TiO_2$ (mol%) |
|---|---|---|---|
| Example 6 | $Li_{1.03}Ni_{0.930}Co_{0.030}Mn_{0.029}Ti_{0.011}O_2$ | 0.4 | 0.7 |
| Comparative Example 1 | $Li_{1.03}Ni_{0.791}Co_{0.099}Mn_{0.099}Ti_{0.011}O_2$ | 0.1 | 1 |
| Comparative Example 2 | $Li_{1.03}Ni_{0.791}Co_{0.099}Mn_{0.099}Ti_{0.011}O_2$ | 0.2 | 0.9 |
| Comparative Example 3 | $Li_{1.03}Ni_{0.791}Co_{0.099}Mn_{0.099}Ti_{0.011}O_2$ | 0.9 | 0.2 |
| Comparative Example 4 | $Li_{1.03}Ni_{0.791}Co_{0.099}Mn_{0.099}Ti_{0.011}O_2$ | 1 | 0.1 |
| Comparative Example 5 | $Li_{1.03}Ni_{0.798}Co_{0.010}Mn_{0.010}Ti_{0.002}O_2$ | 0.1 | 0.1 |
| Comparative Example 6 | $Li_{1.03}Ni_{0.773}Co_{0.097}Mn_{0.097}Ti_{0.033}O_2$ | 1.5 | 1.8 |
| Comparative Example 7 | $Li_{1.03}Ni_{0.930}Co_{0.030}Mn_{0.029}Ti_{0.011}O_2$ | 0.1 | 1 |
| Comparative Example 8 | $Li_{1.03}Ni_{0.930}Co_{0.030}Mn_{0.029}Ti_{0.011}O_2$ | 0.2 | 0.9 |
| Comparative Example 9 | $Li_{1.03}Ni_{0.930}Co_{0.030}Mn_{0.029}Ti_{0.011}O_2$ | 0.9 | 0.2 |
| Comparative Example 10 | $Li_{1.03}Ni_{0.930}Co_{0.030}Mn_{0.029}Ti_{0.011}O_2$ | 1 | 0.1 |

Preparation Example 2. Manufacture of lithium secondary battery

92 wt% of the positive electrode active material prepared according to Preparation Example 1, 4 wt% of artificial graphite, and 4 wt% of a PVDF binder were dispersed in 30 g of N-methyl-2 pyrrolidone (NMP) to prepare a positive electrode slurry. The positive electrode slurry was uniformly applied to an aluminum thin film having a thickness of 15 $\mu$m and vacuum dried at 135 °C to prepare a positive electrode for a lithium secondary battery.

Using lithium foil as a counter electrode to the positive electrode and a porous polyethylene membrane (Celgard 2300, thickness: 25 $\mu$m) as a separator, a coin cell was manufactured using an electrolyte in which $LiPF_6$ was present at a concentration of 1.15 M in a solvent in which ethylene carbonate and ethyl methyl carbonate were mixed in a volume ratio of 3:7.

Experimental Example 1. Composition analysis of positive electrode active material

TEM/EDX analysis was performed to confirm a change in the concentration of cobalt in the lithium composite oxide included in the positive electrode active material prepared according to Preparation Example 1.

First, each lithium composite oxide included in the positive electrode active material prepared according to Preparation Example 1 was screened, and the lithium composite oxide was cross-sectioned using a Ga-ion source (FIB), and then cross-sectional TEM images were taken using a scanning electron microscope.

Then, after selecting 10 of the plurality of primary particles identified from the cross-sectional TEM image, the target transition metal, titanium, was mapped through EDX analysis on the selected primary particles, and a change in the concentration of titanium according to the short axis direction of the primary particle was confirmed through line scanning of the short axis direction of the primary particle.

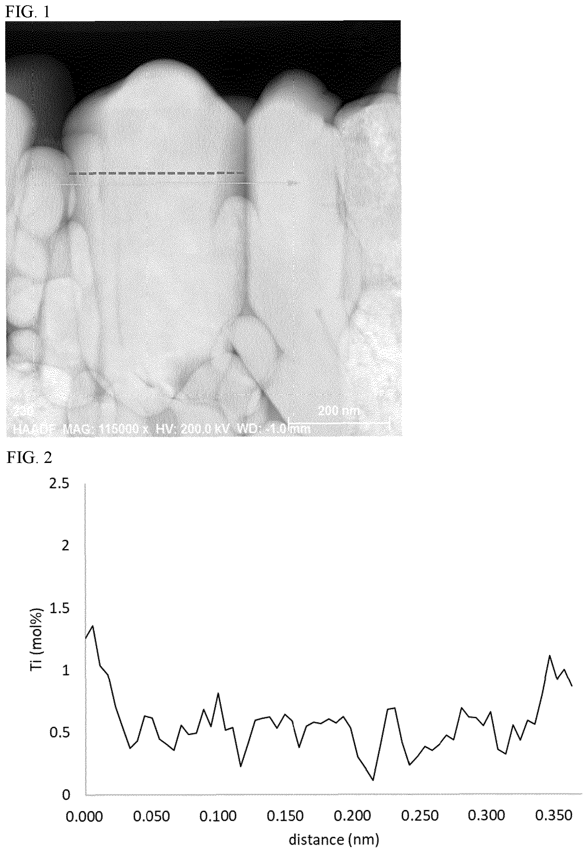

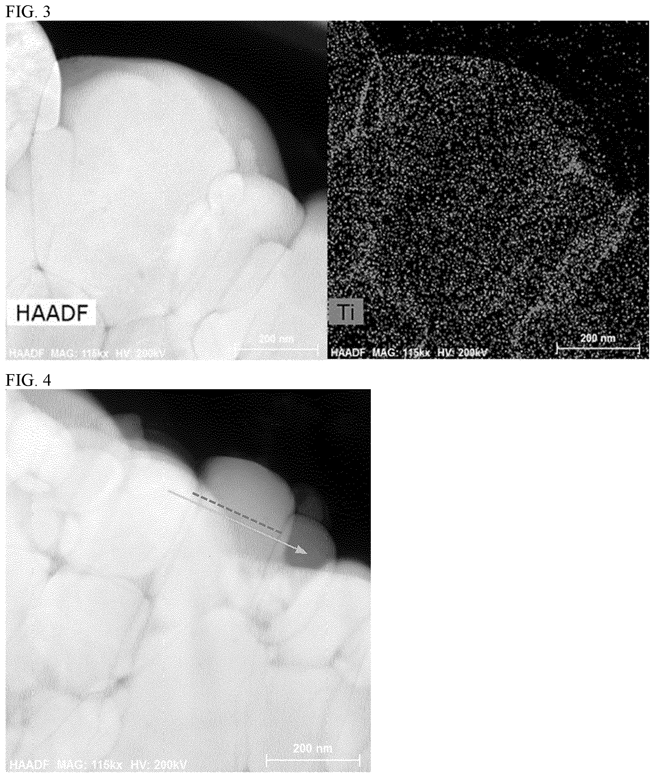

FIG. 1 is a cross-sectional TEM image of a lithium composite oxide included in a positive electrode active material according to Example 1, wherein the direction of the arrow in FIG. 1 indicates the line scanning direction along the short axis direction of the primary particle, and the broken line indicates the line sum spectrum section. FIG. 2 shows a line sum spectrum of titanium according to the line scanning direction shown in FIG. 1. FIG. 3 shows a cross-sectional TEM image of the lithium composite oxide included in the positive electrode active material according to Example 1 taken at an angle different from that of FIG. 1 and EDX mapping results for titanium.

Referring to FIGS. 1 to 3, it can be confirmed that titanium is present in a region corresponding to the core of the primary particle, which indicates that the titanium in the primary particle is doped. In addition, it can be confirmed that titanium is present in the region corresponding to the shell of the primary particle, and a relatively large amount of titanium is present compared to the region corresponding to the core of the primary particle. The result means that titanium was coated on the surface of the primary particle.

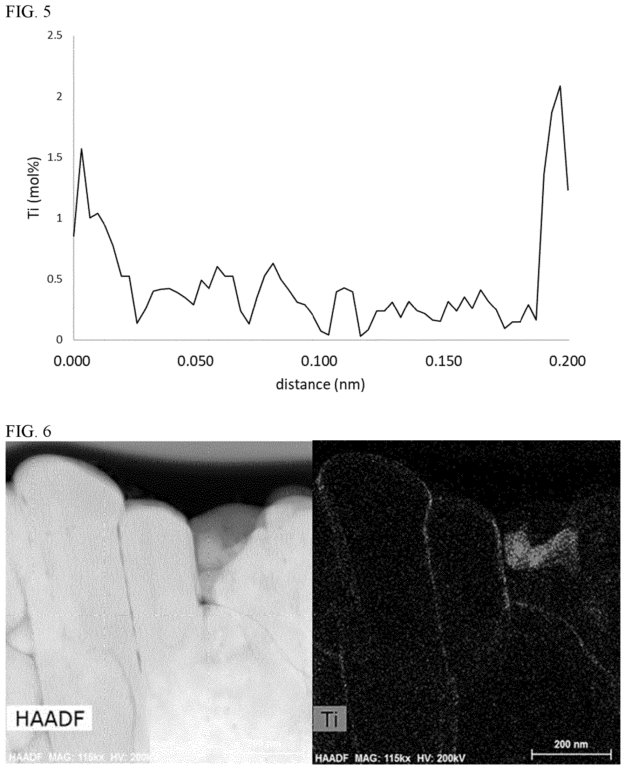

FIG. 4 is a cross-sectional TEM image of a lithium composite oxide included in a positive electrode active material according to Comparative Example 1, wherein the direction of the arrow in FIG. 4 indicates the line scanning direction along the short axis direction of the primary particle. FIG. 5 shows a line sum spectrum of titanium according to the line scanning direction shown in FIG. 4, and a broken line indicates a line sum spectrum section. FIG. 6 shows a cross-sectional TEM image of the lithium composite oxide included in the positive electrode active material according to Comparative Example 1 taken at an angle different from that of FIG. 4 and EDX mapping results for titanium.

Referring to FIGS. 4 to 6, although titanium is present in the region corresponding to the core of the primary particle, it can be confirmed that the amount of titanium doped in the primary particle is very small when compared to the positive electrode active material according to Example 1. In addition, it can be confirmed that most of the titanium is present on the surface of the primary particle when compared with the region corresponding to the core of the primary particle.

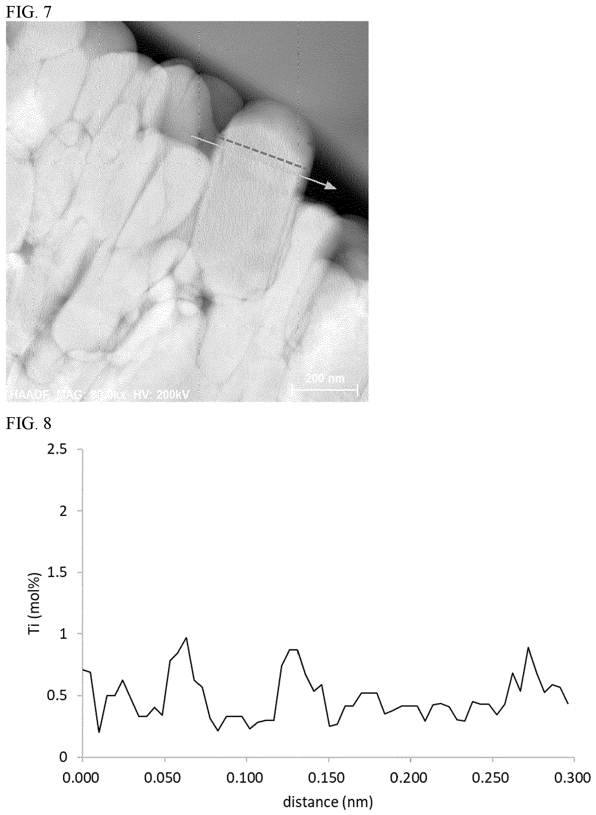

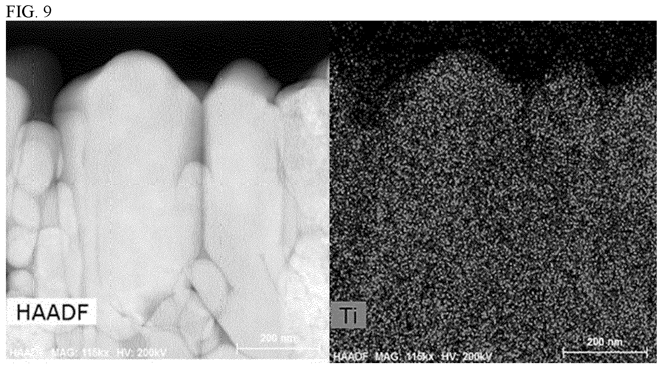

FIG. 7 is a cross-sectional TEM image of a lithium composite oxide included in a positive electrode active material according to Comparative Example 4, wherein the direction of the arrow in FIG. 7 indicates the line scanning direction along the short axis direction of the primary particle, and the broken line indicates the line sum spectrum section. FIG. 8 shows a line sum spectrum of titanium according to the line scanning direction shown in FIG. 7. FIG. 9 shows a cross-sectional TEM image of the lithium composite oxide included in the positive electrode active material according to Comparative Example 4 taken at an angle different from that of FIG. 7 and EDX mapping results for titanium.

Referring to FIGS. 7 to 9, it can be confirmed that titanium is almost uniformly present in the region corresponding to the core of the primary particle and the region corresponding to the shell of the primary particle.

According to the method described above, the average value of the concentration of titanium in the region corresponding to the core and the region corresponding to the shell in the lithium composite oxide (primary particles) included in the positive electrode active material prepared according to Preparation Example 1 was calculated, and the result of the calculation is shown in Table 2 below.

[Table 2]

| Classification | (a1+a2)/2 | b1 | ((a1+a2)/2)/b1 |
|---|---|---|---|
| Example 1 | 1.062 | 0.504 | 2.106 |
| Example 2 | 0.924 | 0.623 | 1.484 |
| Example 3 | 1.156 | 0.466 | 2.481 |
| Example 4 | 1.043 | 0.529 | 1.973 |
| Example 5 | 0.903 | 0.617 | 1.464 |
| Example 6 | 1.137 | 0.454 | 2.502 |
| Comparative Example 1 | 1.378 | 0.330 | 4.178 |
| Comparative Example 2 | 1.206 | 0.357 | 3.375 |
| Comparative Example 3 | 0.546 | 0.468 | 1.168 |
| Comparative Example 4 | 0.528 | 0.476 | 1.109 |
| Comparative Example 5 | 0.227 | 0.083 | 2.735 |
| Comparative Example 6 | 2.699 | 0.832 | 3.244 |
| Comparative Example 7 | 1.233 | 0.336 | 3.673 |
| Comparative Example 8 | 1.202 | 0.368 | 3.268 |
| Comparative Example 9 | 0.528 | 0.477 | 1.107 |
| Comparative Example 10 | 0.511 | 0.489 | 1.045 |

wherein, when the short axis diameter of the primary particle selected from the cross-sectional TEM image is r, a1 is the average content (mol%) of titanium measured based on all metal elements excluding lithium in the region of 0 to 0.05r from the start point of the line sum spectrum,

a2 is the average content (mol%) of titanium measured based on all metal elements excluding lithium in the region of 0.95r to r from the start point of the line sum spectrum, and

b1 is the average content (mol%) of titanium measured based on all metal elements excluding lithium in the region of 0.05r to 0.95r from the start point of the line sum spectrum.

Experimental Example 2. Evaluation of electrochemical properties of lithium secondary battery

Charging capacity, discharge capacity and charge/discharge efficiency

A charging/discharging experiment by applying 25°C, voltage range of 3.0V to 4.25V, and a discharge rate of 0.2 C using an electrochemical analyzer (Toyo, Toscat-3100) for the lithium secondary battery (coin cell) manufactured in Preparation Example 2 was carried out to measure the charge capacity, discharge capacity and charge/discharge efficiency.

High-temperature lifetime characteristics (cycle capacity retention rate)

The same lithium secondary battery was subjected to two cycles of charging/discharging under the conditions of 25 °C, voltage range of 3.0 V to 4.4 V, and 0.1 C/0.1 C, and subjected to one cycle of charging/discharging under the condition of 45 °C, voltage ranges of 3.0V to 4.4V, and 0.01 C/0.01 C, and then subjected to fifty cycles of charging/-discharging under the conditions at 45 °C, voltage ranges of 3.0 V to 4.4 V, and 1.0 C/1.0 C, and the ratio of the discharge capacity at the 50th cycle to the initial capacity (cycle capacity retention rate) was measured.

Impedance (EIS; Electrochemical Impedance Spectroscopy) Characteristics

After charging the same lithium secondary battery under the condition of 1C, the resistance was measured within the frequency (10 kHz to 0.01 Hz, 10 mV) range using electrochemical impedance spectroscopy to calculate the Rct (charge transfer resistance) value.

Output efficiency

For the same lithium secondary battery, the output efficiency (C-rate) of 5.0 C/0.1 C was measured using an electrochemical analyzer (Toscat-3100 manufactured by Toyo Systems) at 25 °C through charge/discharge experiments in which discharge rates in the voltage range of 3.0 V to 4.3 V and 0.1 C to 5.0 C were applied.
The measurement results are shown in Table 3 below.

[Table 3]

| Classification | Charge capacity (mAh/g) | Discharge capacity (mAh/g) | Charge/ discharge efficiency (%) | Retention @50cy (%) | EIS (Ω) | C-rate (%) |
|---|---|---|---|---|---|---|
| Example 1 | 224.7 | 209.7 | 93.3% | 97.6% | 8.6 | 80.9% |
| Example 2 | 224.2 | 209.4 | 93.4% | 97.2% | 9.1 | 81.4% |
| Example 3 | 224.0 | 209.1 | 93.3% | 97.9% | 8.1 | 80.5% |
| Example 4 | 252.4 | 231.8 | 91.8% | 92.2% | 48.0 | 80.4% |
| Example 5 | 251.6 | 230.9 | 91.8% | 91.2% | 53.4 | 81.2% |
| Example 6 | 251.4 | 231.1 | 91.9% | 92.4% | 46.2 | 80.1% |
| Comparative Example 1 | 218.3 | 202.1 | 92.6% | 98.5% | 4.3 | 75.2% |
| Comparative Example 2 | 219.7 | 203.8 | 92.8% | 98.2% | 4.9 | 75.3% |
| Comparative Example 3 | 216.9 | 197.7 | 91.1% | 95.8% | 16.6 | 82.2% |
| Comparative Example 4 | 215.1 | 195.6 | 90.9% | 95.2% | 22.7 | 82.5% |
| Comparative Example 5 | 205.9 | 181.1 | 88.0% | 93.1% | 34.7 | 78.8% |
| Comparative Example 6 | 219.1 | 194.1 | 88.6% | 97.1% | 7.7 | 80.1% |

(continued)

| Classification | Charge capacity (mAh/g) | Discharge capacity (mAh/g) | Charge/ discharge efficiency (%) | Retention @50cy (%) | EIS (Ω) | C-rate (%) |
|---|---|---|---|---|---|---|
| Comparative Example 7 | 240.3 | 218.1 | 90.8% | 94.7% | 33.1 | 76.3% |
| Comparative Example 8 | 242.7 | 220.5 | 90.9% | 94.2% | 35.3 | 76.9% |
| Comparative Example 9 | 240.2 | 218.8 | 91.1% | 88.9% | 94.1 | 82.7% |
| Comparative Example 10 | 238.7 | 216.6 | 90.7% | 87.6% | 134.3 | 82.7% |

Referring to the results of Examples 1 to 3 and Comparative Examples 1 to 4 in Table 3, in the case of Comparative Examples 1 and 2 in which $((a1+a2)/2)/b1$ values are greater than 3.25, it can be confirmed that although the EIS and cycle capacity retention rate are slightly better than those of Examples 1 to 3, charge capacity, discharge capacity and charge/discharge efficiency, and output efficiency (c-rate) were lower than in Examples 1 to 3.

In addition, in the case of Comparative Examples 3 and 4 in which the $((a1+a2)/2)/b1$ value is less than 1.4, it can be confirmed that all properties except the output efficiency (c-rate) were lower than in Examples 1 to 3.

That is, it can be confirmed that the lithium secondary battery using the positive electrode active material according to Examples 1 to 3 compared to Comparative Examples 1 to 4 can exhibit an overall improvement effect in various electrochemical properties.

Referring to the results of Examples 4 to 6 and Comparative Examples 7 to 10 in Table 3, in the case of Comparative Examples 7 and 8 in which $((a1+a2)/2)/b1$ values are greater than 3.25, it can be confirmed that although the EIS and cycle capacity retention rate are slightly better than those of Examples 4 to 6, the improvement effect of charge capacity, discharge capacity and charge/discharge efficiency, and output efficiency (c-rate) is insufficient.

In addition, in the case of Comparative Examples 9 and 10 in which the $((a1+a2)/2)/b1$ value is less than 1.4, it can be confirmed that all properties except the output efficiency (c-rate) were lower than in Examples 1 to 3.

That is, it can be confirmed that the lithium secondary battery using the positive electrode active material according to Examples 1 to 3 compared to the lithium secondary batteries using the positive electrode active materials according to Comparative Examples 1 to 4 can exhibit an overall improvement effect in various indicators related to electrochemical properties.

Meanwhile, referring to the results of Table 2, it can be confirmed that the titanium content in the core and the shell of the primary particle constituting the positive electrode active material according to Comparative Examples 5 and 6 is excessively low or excessively high.

Although the $((a1+a2)/2)/b1$ value of the positive electrode active material according to Comparative Example 5 is less than 3.25, referring to the results in Table 3, it can be confirmed that the lithium secondary battery using the positive electrode active material according to Comparative Example 5 in which the titanium content in the core and the shell of the primary particle is excessively low has an overall insignificant improvement effect in various indicators related to electrochemical properties.

In addition, although the $((a1+a2)/2)/b1$ value of the positive electrode active material according to Comparative Example 6 is less than 3.25, referring to the results in Table 3, it can be confirmed that the lithium secondary battery using the positive electrode active material according to Comparative Example 6 in which the titanium content in the core and the shell of the primary particle is excessively high has an insignificant improvements in the charge capacity, the discharge capacity and the charge/discharge efficiency.

**Claims**

1. A positive electrode active material comprising a lithium composite oxide containing at least nickel and titanium, wherein:

   the lithium composite oxide is secondary particles in which a plurality of primary particles are agglomerated, and the content (mol%) of titanium calculated from the line sum spectrum of titanium obtained through EDX line scanning for the short axis direction of the primary particle selected from the cross-sectional TEM image of the lithium composite oxide satisfies the following Equation 1:

[Equation 1]

$$1.4 \leq ((a1+a2)/2)/b1 \leq 3.25$$

wherein, when the short axis diameter of the primary particle selected from the cross-sectional TEM image is r,

a1 is the average content (mol%) of titanium measured based on all metal elements excluding lithium in the region of 0 to 0.05r from the start point of the line sum spectrum,

a2 is the average content (mol%) of titanium measured based on all metal elements excluding lithium in the region of 0.95r to r from the start point of the line sum spectrum, and

b1 is the average content (mol%) of titanium measured based on all metal elements excluding lithium in the region of 0.05r to 0.95r from the start point of the line sum spectrum, wherein

titanium in the lithium composite oxide is present in an amount greater than 0.2 mol% and less than 3.3 mol% based on all metal elements excluding lithium, wherein

the lithium composite oxide further comprises at least one metal element selected from cobalt, manganese, and aluminum, and wherein

the primary particle is represented by the following Chemical Formula 1:

[Chemical Formula 1] $Li_wNi_{1-(x+y+z)}Ti_xM1_yM2_zO_2$

wherein,

M1 is at least one selected from Co, Mn, and Al,

M2 is at least one selected from P, Sr, Ba, Zr, Co, Mn, Al, W, Ce, Hf, Ta, F, Mg, Cr, V, Fe, Zn, Si, Y, Ga, Sn, Mo, Ge, Nd, B, Nb, Gd, and Cu;

M1 and M2 are different from each other,

$0.5 \leq w \leq 1.5$, $0.002 < x < 0.033$, $0 < y \leq 0.40$, $0 \leq z \leq 0.20$.

2. The positive electrode active material of claim 1, wherein at least a portion of titanium in the lithium composite oxide is present in a doped state in the primary particle.

3. The positive electrode active material of claim 2, wherein the average content (mol%) of titanium measured based on all metal elements excluding lithium in the region of 0.05r to 0.95r from the start point of the line sum spectrum is greater than 0.083 mol% and less than 0.832 mol%.

4. The positive electrode active material of claim 1, wherein

the primary particle is a core-shell particle comprising a core and a shell present on at least a portion of the surface of the core,

a metal oxide represented by the following Chemical Formula 2 is present in the shell:

[Chemical Formula 2] $Li_aTi_bM3_cO_d$

wherein,

M3 is at least one selected from Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Ce, Gd and Nd, and

$0 \leq a \leq 10$, $0 < b \leq 8$, $0 \leq c \leq 8$, $2 \leq d \leq 13$.

5. The positive electrode active material of claim 4, wherein at least one selected from titanium oxide and lithium titanium oxide is present in the shell.

6. A positive electrode comprising the positive electrode active material according to claim 5.

7. A lithium secondary battery using the positive electrode according to claim 6.

**Patentansprüche**

1.  Ein Aktivmaterial für Positivelektroden, umfassend ein Lithium-Mischoxyd, enthaltend mindestens Nickel und Titan, worin

    das Lithium-Mischoxyd aus Sekundärpartikeln ist, in denen eine Mehrzahl Primärpartikel agglomeriert sind, und der Gehalt (mol%) an Titan, berechnet aus dem Liniensummenspektrum aus Titan, erhalten durch EDX-Zeilenscan für die Richtung der kurzen Achse des Primärpartikels, ausgewählt aus dem Durchmesser-TEM-Bild des Lithium-Mischoxyds, folgender Gleichung 1 folgt:

$$[\text{Gleichung 1}]$$

$$1{,}4 \leq ((a1+a2)/2)/b1 \leq 3{,}25$$

    worin, wenn der Durchmesser durch die kurze Achse des Primärpartikels, ausgewählt aus dem Durchmesser-TEM-Bild r ist,
    a1 der durchschnittliche Gehalt (mol%) an Titan ist, gemessen auf Grundlage aller Elemente außer Lithium, im Bereich von 0 bis 0,05r vom Startpunkt des Liniensummenspektrums,
    a2 der durchschnittliche Gehalt (mol%) an Titan ist, gemessen auf Grundlage aller Elemente außer Lithium, im Bereich von 0,95r bis r vom Startpunkt des Liniensummenspektrums, und
    b1 der durchschnittliche Gehalt (mol%) an Titan ist, gemessen auf Grundlage aller Elemente außer Lithium, im Bereich von 0,05r bis 0,95r vom Startpunkt des Liniensummenspektrums, worin
    Titan im Lithium-Mischoxyd in einer Menge größer als 0,2 mol% und weniger als 3,3 mol% vorliegt, auf Grundlage aller Elemente außer Lithium, worin
    das Lithium-Mischoxyd zudem ein metallisches Element, ausgewählt aus Cobalt, Mangan und Aluminium umfasst, und worin
    das Primärpartikel durch die folgende Chemische Formel 1 dargestellt wird:

    $$[\text{Chemische Formel 1}] \qquad Li_w Ni_{1-(x+y+z)} Ti_x M1_y M2_z O_2$$

    worin

    M1 mindestens eines ist, ausgewählt aus Co, Mn und Al,
    M2 mindestens eines ist, ausgewählt aus P, Sr, Ba, Zr, Co, Mn, Al, W, Ce, Hf, Ta, F, Mg, Cr, V, Fe, Zn, Si, Y, Ga, Sn, Mo, Ge, Nd, B, Nb, Gd und Cu;
    M1 und M2 unterschiedlich voneinander sind,
    $0{,}5 \leq w \leq 1{,}5$, $0{,}002 < x < 0{,}033$, $0 < y \leq 0{,}40$, $0 \leq z \leq 0{,}20$.

2.  Das Aktivmaterial für Positivelektroden aus Anspruch 1, worin mindestens ein Anteil des Titans im Lithium-Mischoxyd in einem dotierten Zustand im Primärpartikel vorliegt.

3.  Das Aktivmaterial für Positivelektroden aus Anspruch 2, worin der durchschnittliche Gehalt (mol%) an Titan, gemessen auf Grundlage aller Elemente außer Lithium im Bereich von 0.05r bis 0.95r vom Startpunkt des Liniensummenspektrums größer als 0,083 mol% und weniger als 0,832 mol% ist.

4.  Das Aktivmaterial für Positivelektroden aus Anspruch 1, worin

    das Primärpartikel ein Kern-Schale-Partikel ist, umfassend einen Kern und eine Schale auf mindestens einem Anteil der Oberfläche des Kerns,
    ein Metalloxyd, dargestellt durch die folgende Chemische Formel 2 in der Schale vorliegt:

    $$[\text{Chemische Formel 2}] \qquad Li_a Ti_b M3_c O_d$$

    worin

    M3 mindestens eines ist, ausgewählt aus Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Ce, Gd und Nd, und
    $0 \leq a \leq 10$, $0 < b \leq 8$, $0 \leq c \leq 8$, $2 \leq d \leq 13$.

5. Das Aktivmaterial für Positivelektroden aus Anspruch 4, worin mindestens eines, ausgewählt aus Titanoxyd und Lithiumtitanoxyd, in der Schale vorliegt.

6. Eine Positivelektrode, umfassend das Aktivmaterial für Positivelektroden gemäß Anspruch 5.

7. Eine Lithium-Sekundärbatterie, welche die Positivelektrode gemäß Anspruch 6 verwendet.

**Revendications**

1. Matériau actif d'électrode positive, comprenant un oxyde composite de lithium contenant au moins du nickel et du titane, où :

   l'oxyde composite de lithium est constitué de particules secondaires dans lesquelles une pluralité de particules primaires sont agglomérées, et
   la teneur (en pourcentage molaire) en titane calculée à partir du spectre de somme linéaire du titane obtenu par balayage linéaire EDX pour la direction d'axe court de la particule primaire sélectionnée dans l'image TEM en coupe transversale de l'oxyde composite de lithium satisfait à l'équation 1 suivante :

   [Équation 1]

   $$1,4 \leq ((1a1 + a2)/2)/b1 \leq 3,25$$

   où, si le diamètre d'axe court de la particule primaire sélectionnée dans l'image MET en coupe transversale est r,
   a1 est la teneur moyenne (en pourcentage molaire) de titane mesurée sur la base de tous les éléments métalliques, à l'exclusion du lithium, dans la plage de 0 à 0, 05r à partir du point initial du spectre de somme linéaire,
   a2 est la teneur moyenne (en pourcentage molaire) de titane mesurée sur la base de tous les éléments métalliques, à l'exception du lithium, dans la plage de 0, 95r à r à partir du point initial du spectre de somme linéaire, et
   b1 est la teneur moyenne (en pourcentage molaire) de titane mesurée sur la base de tous les éléments métalliques, à l'exclusion du lithium, dans la plage comprise entre 0, 05r et 0, 95r à partir du point initial du spectre de somme linéaire, où
   le titane dans l'oxyde composite de lithium est présent dans une teneur supérieure à 0,2 % et inférieure à 3,3 % sur la base de tous les éléments métalliques, à l'exclusion du lithium, où l'oxyde composite de lithium comprend en outre au moins un élément métallique sélectionné entre le cobalt, le manganèse et l'aluminium, et où
   la particule primaire est représentée par la formule chimique 1 suivante :

   [Formule chimique 1]     $Li_w Ni_{1-(x+y+z)} Ti_x M1_y M2_z O_2$

   où

   M1 est au moins un élément sélectionné entre Co, Mn et Al,
   M2 est au moins un élément sélectionné entre P, Sr, Ba, Zr, Co, Mn, Al, W, Ce, Hf, Ta, F, Mg, Cr, V, Fe, Zn, Si, Y, Ga, Sn, Mo, Ge, Nd, B, Nb, Gd et Cu ;
   M1 et M2 sont différents l'un de l'autre,
   $0,5 \leq w \leq 1, 5, 0, 002 < x < 0, 033, 0 < y \leq 0, 40, 0 \leq z \leq 0, 20$.

2. Matériau actif d'électrode positive selon la revendication 1, où au moins une partie du titane dans l'oxyde composite de lithium est présente à l'état dopé dans la particule primaire.

3. Matériau actif d'électrode positive selon la revendication 2, où la teneur moyenne (en pourcentage molaire) en titane mesurée sur la base de tous les éléments métalliques, à l'exclusion du lithium, dans la plage comprise entre 0, 05r et 0, 95r à partir du point initial du spectre de somme linéaire est supérieure à 0, 083 % en moles et inférieure à 0, 832 % en moles.

4. Matériau actif d'électrode positive selon la revendication 1, où

la particule primaire est une particule cœur-écorce comprenant un cœur et une écorce présente sur au moins une partie de la surface du cœur,
un oxyde métallique représenté par la formule chimique 2 suivante est présent dans l'écorce :

[Formule chimique 2] $Li_aTi_bM3_cO_d$

où

M3 est au moins un élément sélectionné entre Ni, Mn, Co, Fe, Cu, Nb, Mo, Ti, Al, Cr, Zr, Zn, Na, K, Ca, Mg, Pt, Au, B, P, Eu, Sm, W, Ce, V, Ba, Ta, Sn, Hf, Ce, Gd et Nd, et
$0 \leq a \leq 10$, $0 < b \leq 8$, $0 \leq c \leq 8$, $2 \leq d \leq 13$.

5. Matériau actif d'électrode positive selon la revendication 4, où au moins un élément sélectionné entre oxyde de titane et oxyde de lithium-titane est présent dans l'écorce.

6. Électrode positive, comprenant le matériau actif d'électrode positive selon la revendication 5.

7. Batterie secondaire au lithium utilisant l'électrode positive selon la revendication 6.

FIG. 1

FIG. 2

FIG. 3

FIG. 4

FIG. 5

FIG. 6

FIG. 7

FIG. 8

FIG. 9

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3690999 A1
- CN 112654585 A